# FASCICULE DE BREVET EUROPEEN

(11) **EP 4 587 493 B1**
(45) Date de publication et mention de la délivrance du brevet: **18.11.2026**
(21) Numéro de dépôt: 23768878.3
(22) Date de dépôt: 12.09.2023
(51) Int. Cl.: C08F 295/00, C08F 210/02, C08F 297/08, C08L 53/00

(54) **POLYMÈRE TRIBLOC AYANT UN BLOC CENTRAL DIÉNIQUE RICHE EN ÉTHYLÈNE ET DEUX BLOCS TERMINAUX, RESPECTIVEMENT POLYSTYRÈNE ET POLYÉTHYLÈNE**
TRIBLOCKPOLYMER MIT EINEM ZENTRALEN DIENBLOCK MIT HOHEM ETHYLENGEHALT UND ZWEI ENDBLÖCKEN, INSBESONDERE POLYSTYROL UND POLYETHYLEN
TRIBLOCK POLYMER HAVING A DIENE CENTRAL BLOCK RICH IN ETHYLENE AND TWO TERMINAL BLOCKS, RESPECTIVELY POLYSTYRENE AND POLYETHYLENE

(30) Priorité: 15.09.2022 FR 2209321
(43) Date de publication de la demande: 23.07.2025
(73) Titulaire: COMPAGNIE GENERALE DES ETABLISSEMENTS MICHELIN, 63000 Clermont-Ferrand (FR); Centre National de la Recherche Scientifique, 75794 Paris Cedex 16 (FR); Ecole Supérieure de Chimie Physique Electronique de Lyon, 69616 Villeurbanne Cedex (FR); UNIVERSITE CLAUDE BERNARD - LYON 1, 69622 Villeurbanne Cédex (FR)
(72) Inventeur: BOISSON, Christophe, 01390 TRAMOYES (FR); D'AGOSTO, Franck, 69740 GENAS (FR); DIRE, Charlotte, 63040 CLERMONT-FERRAND CEDEX 09 (FR); DRONET, Séverin, 63040 CLERMONT-FERRAND CEDEX 09 (FR); LANGLAIS, Marvin, 63040 CLERMONT-FERRAND CEDEX 09 (FR); NGO, Robert, 63040 CLERMONT-FERRAND CEDEX 09 (FR); JEAN-BAPTISTE-DIT-DOMINIQUE, François, 63040 CLERMONT-FERRAND CEDEX 09 (FR); MONTARNAL, Damien, 38300 RUY-MONTCEAU (FR); ALIOUI, Samy, 69100 VILLEURBANNE (FR)
(74) Mandataire: M.F.P. Michelin
(86) Numéro de dépôt international: PCT/EP2023/075013
(87) Numéro de publication internationale: WO 2024/056662

(56) Documents cités:
- WO-A1-2019/077232
- WO-A1-2019/077235
- WO-A1-2021/123590

## Description

Le domaine de la présente invention est celui des copolymères diéniques riches en unités éthylène.

Il a été montré que des copolymères statistiques à base d'éthylène et de 1,3-diène et riches en unités éthylène présentent des propriétés intéressantes de rigidité, d'hystérèse, d'usure et d'adhésion. On peut par exemple se référer aux demandes de brevet WO 2014114607 A1, WO 2016012259 A1 et WO 2016087248 A1.

Un autre avantage de ces copolymères est l'utilisation d'éthylène qui est un monomère courant et disponible sur le marché, et accessible par voie fossile ou biologique. Un autre avantage de ces copolymères est la présence d'unités éthylène le long du squelette de polymères, unités largement moins sensibles que les unités diéniques aux mécanismes de dégradation oxydantes ou thermo-oxydantes, ce qui confère aux matériaux une meilleure stabilité et durée de vie.

La synthèse de polymères diblocs dans lesquels un des blocs est un copolymère statistique d'éthylène et d'un 1,3-diène et l'autre bloc est un polystyrène est décrite dans les documents WO 2019077235 et WO 2021123590. Soumis à une déformation ou bien à des cycles répétés de déformation, ces polymères diblocs présentent une déformation rémanente significative, ce qui traduit une recouvrance élastique relativement faible du polymère. Pour des usages, il est d'intérêt de disposer de polymères qui présentent une meilleure recouvrance élastique, c'est-à-dire une moindre déformation rémanente après une ou plusieurs déformations.

Les Demanderesses ont découvert que la recouvrance élastique des polymères diblocs ayant un bloc polystyrène et un bloc copolymère statistique d'éthylène et d'un 1,3-diène est améliorée par une modification des polymères diblocs en des polymères triblocs qui comportent un bloc central qui est le copolymère statistique d'éthylène et d'un 1,3-diène et deux blocs terminaux, le bloc polystyrène et un bloc polyéthylène.

Ainsi, un premier objet de l'invention est un polymère tribloc de formule A-B-C dans laquelle le symbole A représente un bloc polystyrène, le symbole B représente un bloc copolymère statistique de température de transition vitreuse inférieure à -10°C, le copolymère statistique comprenant des unités d'un 1,3-diène et plus de 50% en mole d'unités éthylène, et le symbole C représente un bloc polyéthylène de température de fusion supérieure à 90°C.

Un deuxième objet de l'invention est une composition qui comprend un polymère tribloc conforme à l'invention et un autre composant.

Un autre objet de l'invention est un procédé de synthèse d'un polymère tribloc de formule A-B-C conforme à l'invention, lequel procédé comprend, en présence d'un système catalytique à base au moins d'un métallocène de formule (I) et d'un organomagnésien de formule (II), la copolymérisation statistique d'un mélange monomère contenant de l'éthylène et un 1,3-diène , suivie de l'homopolymérisation de l'éthylène,

P(Cp¹Cp²) Nd(BH₄)_{(1+y)} Li_{γ} (THF)ₓ (1)

R-Mg-A (II)

Cp¹ et Cp², identiques ou différents, étant choisis dans le groupe constitué par les groupes cyclopentadiényles et les groupes fluorényles, les groupes pouvant être substitués ou non, P étant un groupe pontant les deux groupes Cp¹ et Cp² et représentant un groupe ZR¹R², Z représentant un atome de silicium ou de carbone, R¹ et R², identiques ou différents, représentant chacun un groupe alkyle comprenant de 1 à 20 atomes de carbone, de préférence un méthyle, y, nombre entier, étant égal ou supérieur à 0,
x, nombre entier ou non, étant égal ou supérieur à 0,
R comprenant un noyau benzénique dont deux atomes de carbone sont substitués, l'un des deux est substitué par un méthyle, un éthyle ou un isopropyle ou forme un cycle avec l'atome de carbone qui est son plus proche voisin, le deuxième atome de carbone étant substitué par un méthyle, un éthyle ou un isopropyle, l'atome de magnésium étant en position ortho par rapport à chacun desdits deux atomes de carbone,
A représentant un bloc polystyrène,
B représentant un bloc copolymère statistique de température de transition vitreuse inférieure à -10°C, le copolymère statistique comprenant des unités d'un 1,3-diène et plus de 50% en mole d'unités éthylène,
C représentant un bloc polyéthylène de température de fusion supérieure à 90°C.

### Description détaillée :

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Sauf indication contraire, les taux des unités résultant de l'insertion d'un monomère dans un polymère sont exprimés en pourcentage molaire par rapport à la totalité des unités monomères qui constituent le polymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Le bloc représenté par le symbole B dans la formule A-B-C et désigné ci-après par « le bloc central » représente un bloc qui est un copolymère statistique contenant des unités éthylène et des unités d'un 1,3-diène, ce qui traduit que les unités monomères constitutives du bloc central sont réparties de façon statistique dans le bloc central. Les deux autres blocs représentés par A et C sont des homopolymères, respectivement un polystyrène et un polyéthylène.

De manière connue, on entend par unité éthylène une unité qui a pour motif -(CH₂-CH₂)-. Les unités éthylène présentes dans le bloc B dit bloc central représentent plus de 50% en moles des unités monomères qui constituent le bloc central. Dans la présente demande, le taux des unités éthylène dans le bloc central, à savoir le nombre de moles d'unités éthylène dans le bloc central, est exprimé en pourcentage molaire par rapport au nombre de moles d'unités monomères constituant le bloc central.

Selon l'un quelconque des modes de réalisation de l'invention, le bloc central est de préférence un copolymère statistique d'éthylène et d'un 1,3-diène, auquel cas les unités monomères du bloc central sont celles résultant de la copolymérisation de l'éthylène et du 1,3-diène et sont réparties de façon statistique dans le bloc central.

Selon l'invention, le 1,3-diène dont les unités monomères sont constitutives du bloc central est un seul composé, c'est-à-dire un seul (en anglais « one ») 1,3-diène ou est un mélange de 1,3-diènes qui se différencient les uns des autres par la structure chimique. Le 1,3-diène est de préférence le 1,3-butadiène ou l'isoprène ou bien un mélange de 1,3-diènes dont un est le 1,3-butadiène. Le 1,3-diène est de manière plus préférentielle le 1,3-butadiène. De manière très préférentielle, le bloc central est un copolymère statistique d'éthylène et de 1,3-butadiène.

De manière connue, un 1,3-diène peut s'insérer dans une chaîne polymère en croissance par une insertion 1,4 ou 2,1 ou encore 3,4 dans le cas de diène substitué comme l'isoprène pour donner lieu respectivement à la formation d'unité du 1,3-diène de configuration 1,4, d'unité du 1,3-diène de configuration 1,2 ou de configuration 3,4. De préférence, les unités du 1,3-diène sous la configuration 1,2 et les unités du 1,3-diène sous la configuration 3,4 représentent plus de 50% en mole des unités du 1,3-diène.

Selon un mode de réalisation de l'invention, le bloc central contient des unités du 1,3-diène de configuration 1,4, de préférence 1,4-trans. De préférence, les unités du 1,3-diène de configuration 1,4-trans représentent plus de 50% en mole des unités du 1,3-diène de configuration 1,4. De manière plus préférentielle, les unités du 1,3-diène de configuration 1,4-trans représentent 100% en mole des unités du 1,3-diène de configuration 1,4.

Selon un mode de réalisation particulièrement préférentiel de l'invention, le bloc central contient des unités du 1,3-diène qui sont à plus de 50% en mole des unités de configuration 1,2 ou 3,4, le complément à 100% des unités du 1,3-diène étant des unités de configuration 1,4-trans.

Selon un autre mode de réalisation particulièrement préférentiel de l'invention, en particulier lorsque le 1,3-diène est le 1,3-butadiène ou un mélange de 1,3-diènes dont un est le 1,3-butadiène, le bloc central contient en outre des motifs 1,2-cyclohexane ou des motifs 1,4-cyclohexane, de préférence des motifs 1,2-cyclohexane. La présence de ces structures cycliques dans le bloc central résulte d'une insertion très particulière de l'éthylène et de 1,3-butadiène lors de leur copolymérisation. Le mécanisme d'obtention d'une telle microstructure est par exemple décrit dans le document Macromolecules 2009, 42, 3774-3779. La teneur en motif 1,2-cyclohexane et en motif 1,4-cyclohexane dans le bloc central varie selon les teneurs respectives en éthylène et en 1,3-butadiène dans le bloc central. Préférentiellement, elle est inférieure ou égale à 15%, pourcentage molaire exprimé par rapport au nombre de moles d'unités monomères constituant le bloc central. Le bloc central contient généralement moins de 10% en mole de motif 1,2-cyclohexane et de motif 1,4-cyclohexane pour les taux les plus élevés en éthylène dans le bloc central et peut en contenir plus de 10% pour les taux les plus faibles en éthylène dans le bloc central, par exemple jusqu'à 15%, pourcentage exprimé par rapport au nombre de moles d'unités monomères constituant le bloc central. Le motif 1,2-cyclohexane correspond à la formule suivante.

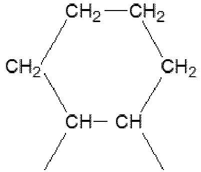

Comme la rigidité du polymère tribloc augmente avec le taux d'unités éthylène dans le bloc central, un polymère tribloc avec un taux d'unités éthylène particulièrement élevé dans le bloc central peut être recherché pour des applications où une forte rigidité du matériau est requise. De préférence, les unités éthylène dans le bloc central représentent plus de 60% en mole des unités qui constituent le bloc central, auquel cas le bloc central contient plus de 60% en mole d'unités éthylène. De manière plus préférentielle, les unités éthylène dans le bloc central représentent au moins 70% en mole des unités qui constituent le bloc central, auquel cas le bloc central contient au moins 70% en mole d'unités éthylène.

Selon un mode de réalisation particulier de l'invention, les unités éthylène dans le bloc central représentent moins de 90% en mole des unités qui constituent le bloc central, auquel cas le bloc central contient moins de 90% en moles d'unités éthylène.

Selon un autre mode de réalisation particulier de l'invention, les unités éthylène dans le bloc central représentent au plus 85% en mole des unités qui constituent le bloc central, auquel cas le bloc central contient au plus 85% en moles d'unités éthylène.

Le bloc central a une température de transition vitreuse (Tg) inférieure à -10°C, préférentiellement comprise entre -90°C et -10°C. De manière plus préférentielle, la température de transition vitreuse du bloc central est comprise entre -70°C et -20°C, avantageusement entre - 50°C et -20°C. De manière connue, la température de transition vitreuse du bloc central peut être réglée par exemple avec la structure chimique du 1,3-diène, avec le taux respectif d'unités éthylène et des unités du 1,3-diène dans le bloc central.

Le bloc central a une masse molaire moyenne en nombre préférentiellement supérieure à 20 000 g/mol, plus préférentiellement supérieure ou égale à 50 000 g/mol.

Le bloc central a une masse molaire moyenne en nombre préférentiellement inférieure ou égale à 150 000 g/mol.

Selon un mode de réalisation préférentiel de l'invention, le bloc central a une masse molaire moyenne en nombre allant de 50 000 g/mol à 150 000 g/mol.

Selon un autre mode de réalisation préférentiel de l'invention le bloc central a une masse molaire moyenne en nombre allant de 50 000 g/mol à 100 000 g/mol.

Le bloc représenté par le symbole A dans la formule A-B-C a pour caractéristique essentielle d'être un polystyrène. De préférence, A représente un polystyrène linéaire. De préférence, le bloc polystyrène est un polystyrène atactique.

Le bloc polystyrène a une masse molaire moyenne en nombre préférentiellement supérieure ou égale à 5 000 g/mol. De préférence, le bloc polystyrène a une masse molaire moyenne en nombre allant de 5 000 g/mol à 100 000 g/mol, en particulier allant de 5 000 g/mol à 65 000 g/mol. De manière plus préférentielle, la Mn du bloc polystyrène est supérieure ou égale à 10 000 g/mol, en particulier allant de 10 000 g/mol à 100 000 g/mol, plus particulièrement allant de 10 000 g/mol à 65 000 g/mol. Le bloc polystyrène a typiquement une température de transition vitreuse supérieure à 80°C, préférentiellement supérieure ou égale à 90°C, plus préférentiellement supérieure ou égale à 100°C. Comme la transition vitreuse du bloc polystyrène se situe dans la même gamme de température que la fusion du bloc polyéthylène, la température de transition vitreuse du bloc polystyrène ne peut être déterminée par analyse (telle que la calorimétrie différentielle à balayage, DSC) sur le polymère tribloc. Elle peut être déterminée au cours de la synthèse du polymère tribloc avant la formation du bloc polyéthylène.

Le bloc représenté par le symbole C dans la formule A-B-C a pour caractéristique essentielle d'être un polyéthylène de température de fusion supérieure à 90°C, en particulier supérieure à 90°C et inférieure à 140°C. La température de fusion du bloc polyéthylène est plus préférentiellement supérieure à 100°C et inférieure à 130°C. De préférence, C représente un polyéthylène linéaire. Le bloc polyéthylène a préférentiellement une masse molaire moyenne en nombre supérieure ou égale à 2 000 g/mol et inférieure ou égale à 12 000 g/mol. La part de bloc polystyrène et de bloc polyéthylène dans le polymère tribloc représente préférentiellement moins de 50% en masse de la masse du polymère tribloc, plus préférentiellement de 15% à 40% en masse de la masse du polymère tribloc.

Le polymère tribloc a une masse molaire moyenne en nombre (Mn) préférentiellement comprise entre 30 000 g/mol et 200 000 g/mol, plus préférentiellement allant de 50 000 g/mol à 150 000 g/mol, en particulier allant de 50 000 g/mol à 100 000 g/mol.

Le polymère tribloc est tout particulièrement un élastomère thermoplastique dans lequel le bloc polystyrène et le bloc polyéthylène constituent les phases rigides du polymère tribloc, le bloc central la phase flexible du polymère tribloc.

Le polymère tribloc conforme à l'invention peut être préparé selon un procédé, qui comprend la copolymérisation statistique d'un mélange monomère contenant de l'éthylène et le 1,3-diène, puis la polymérisation subséquente d'éthylène.

Le système catalytique (ou composition catalytique) utilisé dans la copolymérisation statistique du mélange monomère et dans l'homopolymérisation de l'éthylène est à base au moins d'un métallocène de formule (I) et d'un organomagnésien de formule (II)

P(Cp¹Cp²) Nd(BH₄)_{(1+y)} Li_{y} (THF)ₓ (I)

R-Mg-A (II)

Cp¹ et Cp², identiques ou différents, étant choisis dans le groupe constitué par les groupes cyclopentadiényles et les groupes fluorényles, les groupes pouvant être substitués ou non, P étant un groupe pontant les deux groupes Cp¹ et Cp² et représentant un groupe ZR¹R², Z représentant un atome de silicium ou de carbone, R¹ et R², identiques ou différents, représentant chacun un groupe alkyle comprenant de 1 à 20 atomes de carbone, de préférence un méthyle, y, nombre entier, étant égal ou supérieur à 0,
x, nombre entier ou non, étant égal ou supérieur à 0
le symbole A représentant une chaîne polystyrène identique en tout point au bloc styrène de la formule A-B-C,
R comprenant un noyau benzénique dont deux atomes de carbone sont substitués, l'un des deux est substitué par un méthyle, un éthyle ou un isopropyle ou forme un cycle avec l'atome de carbone qui est son plus proche voisin, le deuxième atome de carbone étant substitué par un méthyle, un éthyle ou un isopropyle, l'atome de magnésium étant en position ortho par rapport à chacun desdits deux atomes de carbone.

Dans la formule (I), l'atome de néodyme est relié à une molécule de ligand constitué des deux groupes Cp¹ et Cp² reliés entre eux par le pont P. De préférence, le symbole P, désigné sous le terme de pont, répond à la formule ZR¹R², Z représentant un atome de silicium, R¹ et R², identiques ou différents, représentant un groupe alkyle comprenant de 1 à 20 atomes de carbone. De manière plus préférentielle, le pont P est de formule SiR¹R², R¹ et R², étant identiques et tels que définis précédemment. De manière encore plus préférentielle, P répond à la formule SiMe₂.

A titre de groupes cyclopentadiényles et fluorényles substitués, on peut citer ceux substitués par des groupes alkyles ayant 1 à 6 atomes de carbone ou par des groupes aryles ayant 6 à 12 atomes de carbone ou encore par des groupes trialkylsilyles tels que SiMe₃. Le choix parmi les groupes alkyles, aryles et trialkylsilyles est aussi orienté par l'accessibilité aux molécules correspondantes que sont les cyclopentadiènes et les fluorènes substitués, parce que ces derniers sont disponibles commercialement ou facilement synthétisables.

A titre de groupes cyclopentadiényles substitués, on peut citer ceux substitués aussi bien en position 2 (ou 5) qu'en position 3 (ou 4), particulièrement ceux substitués en position 2, plus particulièrement le groupe tétraméthylcyclopentadiènyle. Dans la présente demande, dans le cas du groupe cyclopentadiényle, la position 2 (ou 5) désigne la position de l'atome de carbone qui est adjacent à l'atome de carbone auquel est attaché le pont P, comme cela est représenté dans le schéma ci-après.

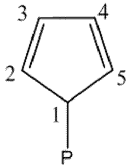

A titre de groupes fluorényles substitués, on peut citer ceux substitués en position 2,7, 3 ou 6, particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

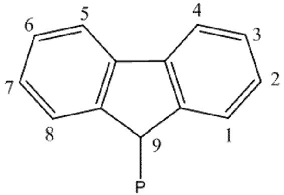

De préférence, Cp¹ et Cp² sont identiques et sont choisis dans le groupe constitué par les groupes fluorényles substitués et le groupe fluorényle. Avantageusement, dans la formule (I) Cp¹ et Cp² représentent chacun un groupe fluorényle substitué ou un groupe fluorényle, de préférence un groupe fluorényle. Le groupe fluorényle est de formule C₁₃H₈. De préférence, le métallocène est de formule (la), (Ib), (Ic), (Id) ou (le) dans lesquelles le symbole Flu présente le groupe fluorényle de formule C₁₃H₈.

[{Me₂SiFlu₂Nd(µ-BH₄)₂Li(THF)}₂] (la)

[Me₂SiFlu₂Nd(µ-BH₄)₂Li(THF)] (Ib)

[Me₂SiFlu₂Nd(µ-BH₄)(THF)] (Ic)

[{Me₂SiFlu₂Nd(µ-BH₄)(THF)}₂] (Id)

[Me₂SiFlu₂Nd(µ-BH₄)] (le)

Le métallocène utilisé pour préparer le système catalytique peut se trouver sous la forme de poudre cristallisée on non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224. Le métallocène peut être préparé de façon traditionnelle par un procédé analogue à celui décrit dans la demande de brevet WO 2007054224, notamment par réaction dans des conditions inertes et anhydres du sel d'un métal alcalin du ligand avec un borohydrure de terre rare dans un solvant adapté, tel un éther, comme le diéthyléther ou le tétrahydrofuranne ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène a lieu dans des conditions anhydres sous atmosphère inerte. Typiquement, les réactions sont conduites à partir de solvants et de composés anhydres sous azote ou argon anhydre.

L'organomagnésien de formule (II) est utilisé dans le système catalytique à titre de co-catalyseur. De préférence, les deux substituants desdits deux atomes de carbone par rapport auxquels l'atome de magnésium est en position ortho, sont identiques. De manière plus préférentielle, ils sont méthyles ou éthyles. Avantageusement, ils sont méthyles.

De préférence, l'organomagnésien de formule (II) répond à la formule (II-1) dans laquelle A représente la chaîne polystyrène, R₁ et R₅, identiques ou différents, représentent un méthyle ou un éthyle et R₂, R₃ et R₄, identiques ou différents, représentent un atome d'hydrogène ou un alkyle. De préférence, R₁ et R₅ représentent un méthyle. De préférence, R₂ et R₄ représentent un atome hydrogène.

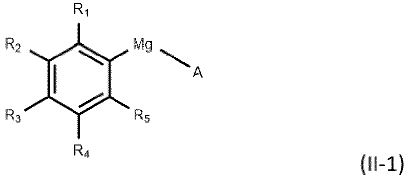

Selon une variante préférentielle, R₁, R₃ et R₅ sont identiques. Selon une variante plus préférentielle, R₂ et R₄ représentent un hydrogène et R₁, R₃ et R₅ sont identiques. Dans une variante davantage préférentielle, R₂ et R₄ représentent un hydrogène et R₁, R₃ et R₅ représentent un méthyle.

L'organomagnésien de formule (II) peut être préparé par un procédé qui comprend la réaction d'un polystyrène anionique vivant ALi avec un halogénure d'un organomagnésien de formule R-Mg-X, R étant défini comme dans la formule (II), A représentant le bloc polystyrène, X étant un atome d'halogène, préférentiellement un atome de chlore ou de brome, plus préférentiellement un atome de brome, le symbole Li représentant de manière bien connue l'atome de lithium. De manière connue, on entend par polystyrène anionique un polystyrène qui est préparé par polymérisation anionique. De manière également connue, on entend par polystyrène vivant un polystyrène dont les chaînes polymères possèdent un centre réactif vis à vis de la polymérisation, typiquement une liaison carbone-lithium, en particulier en extrémité de chaîne polymère.

Le polystyrène anionique vivant est obtenu de façon conventionnelle par polymérisation anionique du styrène dans un solvant, dit solvant de polymérisation. Le solvant de polymérisation peut être tout solvant hydrocarboné connu pour être utilisé dans la polymérisation du styrène. Le solvant de polymérisation est préférentiellement un solvant hydrocarboné, plus préférentiellement le cyclohexane, le méthylcyclohexane ou le toluène.

Le ratio entre la quantité de solvant et la quantité de styrène utile à la formation du polystyrène anionique vivant est choisi par l'homme du métier selon la viscosité souhaitée de la solution polymère du polystyrène vivant. Cette viscosité dépend non seulement de la concentration de la solution polymère, mais aussi de nombreux autres facteurs comme la longueur des chaînes polymères, les interactions intermoléculaires entre les chaînes polystyrène vivantes, le pouvoir complexant du solvant, la température de la solution polymère. Par conséquent, l'homme du métier ajuste la quantité de solvant au cas par cas.

Pour amorcer la polymérisation du styrène peuvent être utilisés les composés bien connus de l'homme du métier comme amorceurs de la polymérisation anionique du styrène. L'amorceur est par exemple un composé qui présente une liaison carbone-lithium. A titre d'amorceur, on peut citer les organolithiens, comme le n-butyllithium, le sec-butyllithium et le tert-butyllithium. L'amorceur est utilisé à un taux choisi en fonction de la longueur de chaîne souhaitée du polystyrène vivant.

La température de polymérisation pour former le polystyrène vivant peut varier dans une large mesure. Traditionnellement, elle varie dans un domaine allant de -20 à 100°C, préférentiellement de 20 à 70°C.

Pour préparer l'organomagnésien de formule (II), la réaction du polystyrène vivant anionique avec l'halogénure d'un organomagnésien peut se faire par l'ajout d'une solution du polystyrène anionique vivant à une solution de l'halogénure d'un organomagnésien R-Mg-X, mais elle se fait préférentiellement par l'ajout d'une solution de l'halogénure d'un organomagnésien R-Mg-X à une solution du polystyrène anionique vivant. La solution du polystyrène anionique vivant est généralement une solution dans un solvant hydrocarboné, de préférence le solvant de polymérisation utilisé pour la synthèse du polystyrène anionique vivant. La solution de l'halogénure d'un organomagnésien R-Mg-X est généralement une solution dans un éther, de préférence le diéthyléther ou le dibutyléther. La concentration du polystyrène anionique vivant est préférentiellement de 0.01 à 1 mole d'équivalent lithium/L, plus préférentiellement de 0.05 à 0.2 mole d'équivalent lithium /L, celle de la solution de l'organomagnésien R-Mg-X préférentiellement de 1 à 5 mol/L, plus préférentiellement de 2 à 3 mol/L.

La réaction entre le polystyrène anionique vivant et de l'halogénure d'un organomagnésien R-Mg-X est conduite typiquement à une température allant de 0°C à 60°C. La mise en contact est réalisée de préférence à une température comprise entre 0°C et 23°C.

Comme toute synthèse faite en présence de composés organométalliques, la mise en contact et la réaction ont lieu dans des conditions anhydres sous atmosphère inerte. Typiquement, les solvants et les solutions sont utilisés sous azote ou argon anhydre. Les différentes étapes du procédé sont conduites généralement sous agitation.

Une fois l'organomagnésien de formule (II) formé, la solution de l'organomagnésien de formule (II) est typiquement stockée avant son utilisation comme co-catalyseur du système catalytique dans des récipients hermétiques, par exemple des bouteilles capsulées, à une température comprise entre -25°C et 23°C, sous atmosphère inerte et anhydre.

Le système catalytique peut être préparé de façon traditionnelle par un procédé analogue à celui décrit dans la demande de brevet WO 2007054224 ou WO 2007054223. Par exemple on fait réagir dans un solvant hydrocarboné le co-catalyseur et le métallocène typiquement à une température allant de 20 à 80°C pendant une durée comprise entre 5 et 60 minutes. Les quantités de co-catalyseur et de métallocène mises en réaction sont telles que le rapport entre le nombre de mole de Mg du co-catalyseur et le nombre de mole de métal de terre rare du métallocène va de préférence de 1 à 100, de manière plus préférentielle de 1 à moins de 10. La plage de valeurs allant de 1 à moins de 10 est notamment plus favorable pour l'obtention de polymères de masses molaires élevées. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du polymère conforme à l'invention.

Le système catalytique se présente généralement sous la forme d'une solution dans un solvant hydrocarboné. Le solvant hydrocarboné peut être aliphatique comme le méthylcyclohexane ou aromatique comme le toluène. Le solvant hydrocarboné est de préférence aliphatique, de manière plus préférentielle le méthylcyclohexane. Généralement, le système catalytique est stocké sous la forme d'une solution dans le solvant hydrocarboné avant d'être utilisé en polymérisation. On peut parler alors de solution catalytique qui comprend le système catalytique et le solvant hydrocarboné. La concentration de la solution catalytique est typiquement définie par la teneur en métal de métallocène dans la solution. La concentration en métal de métallocène a une valeur allant préférentiellement de 0.0001 à 0.2 mol/L, plus préférentiellement de 0.001 à 0.03 mol/L.

Comme toute synthèse faite en présence de composé organométallique, la synthèse du système catalytique a lieu dans des conditions anhydres sous atmosphère inerte. Typiquement, les réactions sont conduites à partir de solvants et de composés anhydres sous azote ou argon anhydre.

Le système catalytique est utilisé pour les deux étapes de polymérisation que sont la copolymérisation statistique du mélange monomère et l'homopolymérisation subséquente de l'éthylène. Les deux étapes de polymérisation du mélange monomère sont conduites de préférence en solution, en continu ou discontinu, dans un réacteur avantageusement agité. Le solvant de polymérisation peut être un solvant hydrocarboné, aromatique ou aliphatique. A titre d'exemple de solvant de polymérisation, on peut citer le toluène et le méthylcyclohexane.

Le système catalytique est généralement introduit dans le réacteur contenant le solvant de polymérisation et le mélange monomère contenant de l'éthylène et un 1,3-diène. Pour atteindre la macrostructure souhaitée du bloc central, l'homme du métier adapte les conditions de polymérisation, notamment le rapport molaire de l'organomagnésien sur le métal Nd constituant le métallocène. Le rapport molaire peut atteindre la valeur de 100, sachant qu'un rapport molaire inférieur à 10 est plus favorable pour l'obtention de polymères de masses molaires élevées.

La préparation du bloc central est réalisée par la copolymérisation statistique du mélange monomère contenant de l'éthylène et un 1,3-diène. De préférence, un ajout continu d'éthylène et de 1,3-diène est réalisé dans le réacteur de polymérisation, auquel cas le réacteur de polymérisation est un réacteur alimenté. Ce mode de réalisation est tout particulièrement adapté pour une incorporation statistique de l'éthylène et du 1,3-diène.

La température de polymérisation varie généralement dans un domaine allant de 30 à 160°C, préférentiellement de 30 à 120°C. Pendant la préparation du bloc central, la température du milieu réactionnel est avantageusement maintenue constante au cours de la copolymérisation et la pression totale dans le réacteur est aussi avantageusement maintenue constante. La préparation du bloc central s'achève en coupant l'alimentation en monomères, notamment par une chute de la pression du réacteur, de préférence jusqu'à environ 3 bars.

La préparation du bloc polyéthylène par la polymérisation subséquente de l'éthylène se poursuit par application d'une pression d'éthylène dans le réacteur, la pression en éthylène étant maintenue constante jusqu'à la consommation désirée d'éthylène pour atteindre la masse molaire moyenne en nombre souhaitée du bloc polyéthylène. La température de polymérisation de l'éthylène est conduite de préférence à une température identique à celle de la préparation du bloc central. La température de polymérisation pour la préparation du bloc polyéthylène varie généralement dans un domaine allant de 30 à 160°C, préférentiellement de 30 à 120°C. La pression pour la préparation du bloc polyéthylène varie généralement dans un domaine allant de 1 bar à 150 bars et préférentiellement de 1 bar à 10 bars. La synthèse du bloc polyéthylène s'achève quand le bloc polyéthylène atteint la masse molaire moyenne en nombre souhaitée.

La polymérisation peut être stoppée par refroidissement du milieu de polymérisation ou par ajout d'un alcool, préférentiellement un alcool contenant 1 à 3 atomes de carbone, par exemple l'éthanol. Le polymère tribloc peut être récupéré selon les techniques classiques connues de l'homme du métier comme par exemple par précipitation, par évaporation du solvant sous pression réduite ou par stripping à la vapeur d'eau.

Alternativement, le polymère tribloc peut être préparé par un autre procédé qui se différencie de celui décrit en ce que le co-catalyseur n'est pas l'organomagnésien de formule (II), mais le polystyrène anionique vivant ALi et que le rapport molaire entre le nombre de moles de polymère vivant et le nombre de mole d'atomes de Nd dans le métallocène varie dans un domaine allant de 0.8 à 1.2.

Le polymère tribloc peut être utilisé dans une composition, autre objet de l'invention, qui comprend typiquement un autre composant. L'autre composant peut être une charge comme un noir de carbone ou une silice, un plastifiant comme une huile, un agent de réticulation comme le soufre ou un peroxyde, un agent antioxydant, ou un polymère, notamment un élastomère. La composition peut être une composition de caoutchouc.

En résumé, l'invention est mise en œuvre avantageusement selon l'un quelconque des modes de réalisation suivants 1 à 39 :
Mode 1 : Polymère tribloc de formule A-B-C dans laquelle le symbole A représente un bloc polystyrène, le symbole B représente un bloc copolymère statistique de température de transition vitreuse inférieure à -10°C, le copolymère statistique comprenant des unités d'un 1,3-diène et plus de 50% en mole d'unités éthylène, et le symbole C représente un bloc polyéthylène de température de fusion supérieure à 90°C.
Mode 2 : Polymère tribloc selon le mode 1 dans lequel le bloc copolymère statistique est un copolymère statistique d'éthylène et d'un 1,3-diène.
Mode 3 : Polymère tribloc selon le mode 1 ou 2 dans lequel le bloc copolymère statistique contient plus de 60% en mole d'unités éthylène.
Mode 4 : Polymère tribloc selon l'un quelconque des modes 1 à 3 dans lequel le bloc copolymère statistique contient au moins 70% en mole d'unités éthylène.
Mode 5 : Polymère tribloc selon l'un quelconque des modes 1 à 4 dans lequel le bloc copolymère statistique contient moins de 90% en mole d'unités éthylène.
Mode 6 : Polymère tribloc selon l'un quelconque des modes 1 à 5 dans lequel le bloc copolymère statistique contient au plus 85% en mole d'unités éthylène.
Mode 7 : Polymère tribloc selon l'un quelconque des modes 1 à 6 dans lequel la part de bloc polystyrène et de bloc polyéthylène dans le polymère tribloc représente moins de 50% en masse de la masse du polymère tribloc.
Mode 8 : Polymère tribloc selon l'un quelconque des modes 1 à 7 dans lequel la part de bloc polystyrène et de bloc polyéthylène dans le polymère tribloc représente de 15% à 40% en masse de la masse du polymère tribloc.
Mode 9 : Polymère tribloc selon l'un quelconque des modes 1 à 8 dans lequel le bloc copolymère statistique a une température de transition vitreuse comprise entre -90°C et -10°C.
Mode 10 : Polymère tribloc selon l'un quelconque des modes 1 à 9 dans lequel le bloc copolymère statistique a une température de transition vitreuse comprise entre -70°C et -20°C.
Mode 11 : Polymère tribloc selon l'un quelconque des modes 1 à 10 dans lequel le bloc copolymère statistique a une température de transition vitreuse comprise entre -50°C et -20°C.
Mode 12 : Polymère tribloc selon l'un quelconque des modes 1 à 11 dans lequel le bloc copolymère statistique a une masse molaire moyenne en nombre supérieure à 20 000 g/mol.
Mode 13 : Polymère tribloc selon l'un quelconque des modes 1 à 12 dans lequel le bloc copolymère statistique a une masse molaire moyenne en nombre supérieure ou égale à 50 000 g/mol.
Mode 14 : Polymère tribloc selon l'un quelconque des modes 1 à 13 dans lequel le bloc copolymère statistique a une masse molaire moyenne en nombre inférieure ou égale à 150 000 g/mol.
Mode 15 : Polymère tribloc selon l'un quelconque des modes 1 à 14 dans lequel le bloc copolymère statistique a une masse molaire moyenne en nombre allant de 50 000 g/mol à 150 000 g/mol.
Mode 16 : Polymère tribloc selon l'un quelconque des modes 1 à 15 dans lequel le bloc copolymère statistique a une masse molaire moyenne en nombre allant de 50 000 g/mol à 100 000 g/mol.
Mode 17 : Polymère tribloc selon l'un quelconque des modes 1 à 16 dans lequel le 1,3-diène est le 1,3-butadiène ou l'isoprène.
Mode 18 : Polymère tribloc selon l'un quelconque des modes 1 à 16 dans lequel le 1,3-diène est le 1,3-butadiène.
Mode 19 : Polymère tribloc selon l'un quelconque des modes 1 à 16 dans lequel le 1,3-diène est un mélange de 1,3-diènes dont un est le 1,3-butadiène.
Mode 20 : Polymère tribloc selon le mode 18 ou 19 dans lequel le bloc copolymère statistique contient des motifs 1,2-cyclohexane ou des motifs 1,4-cyclohexane, de préférence des motifs 1,2-cyclohexane.
Mode 21 : Polymère tribloc selon le mode 20 dans lequel la teneur en motif 1,2-cyclohexane et en motif 1,4-cyclohexane dans le bloc copolymère statistique est inférieure ou égale à 15%, pourcentage molaire exprimé par rapport au nombre de moles d'unités monomères constituant le bloc copolymère statistique.
Mode 22 : Polymère tribloc selon l'un quelconque des modes 1 à 21 dans lequel les unités du 1,3-diène sous la configuration 1,2 et les unités du 1,3-diène sous la configuration 3,4 représentent plus de 50% en mole des unités du 1,3-diène.
Mode 23 : Polymère tribloc selon l'un quelconque des modes 1 à 22 dans lequel le bloc copolymère statistique contient des unités du 1,3-diène qui sont à plus de 50% en mole des unités de configuration 1,2 ou 3,4, le complément à 100% des unités du 1,3-diène étant des unités de configuration 1,4-trans.
Mode 24 : Polymère tribloc selon l'un quelconque des modes 1 à 23 dans lequel le bloc polystyrène a une masse molaire moyenne en nombre supérieure ou égale à 5 000 g/mol.
Mode 25 : Polymère tribloc selon l'un quelconque des modes 1 à 24 dans lequel le bloc polystyrène a une masse molaire moyenne en nombre allant de 5 000 g/mol à 100 000 g/mol.
Mode 26 : Polymère tribloc selon l'un quelconque des modes 1 à 25 dans lequel le bloc polystyrène a une masse molaire moyenne en nombre allant de 5 000 g/mol à 65 000 g/mol.
Mode 27 : Polymère tribloc selon l'un quelconque des modes 1 à 26 dans lequel le bloc polystyrène a une masse molaire moyenne en nombre supérieure ou égale à 10 000 g/mol.
Mode 28 : Polymère tribloc selon l'un quelconque des modes 1 à 27 dans lequel le bloc polystyrène a une masse molaire moyenne en nombre allant de 10 000 g/mol à 100 000 g/mol.
Mode 29 : Polymère tribloc selon l'un quelconque des modes 1 à 28 dans lequel le bloc polystyrène a une masse molaire moyenne en nombre allant de 10 000 g/mol à 65 000 g/mol.
Mode 30 : Polymère tribloc selon l'un quelconque des modes 1 à 29 dans lequel le bloc polystyrène est un polystyrène linéaire.
Mode 31 : Polymère tribloc selon l'un quelconque des modes 1 à 30 dans lequel le bloc polystyrène est un polystyrène atactique.
Mode 32 : Polymère tribloc selon l'un quelconque des modes 1 à 31 dans lequel le bloc polyéthylène a une masse molaire moyenne en nombre supérieure ou égale à 2 000 g/mol et inférieure ou égale à 12 000 g/mol.
Mode 33 : Polymère tribloc selon l'un quelconque des modes 1 à 32 dans lequel la température de fusion du bloc polyéthylène est supérieure à 100°C et inférieure à 130°C.
Mode 34 : Polymère tribloc selon l'un quelconque des modes 1 à 33, lequel polymère tribloc a une masse molaire moyenne en nombre comprise entre 30 000 g/mol et 200 000 g/mol.
Mode 35 : Polymère tribloc selon l'un quelconque des modes 1 à 34, lequel polymère tribloc a une masse molaire moyenne en nombre allant de 50 000 g/mol à 150 000 g/mol.
Mode 36 : Polymère tribloc selon l'un quelconque des modes 1 à 35, lequel polymère tribloc a une masse molaire moyenne en nombre allant de 50 000 g/mol à 100 000 g/mol.
Mode 37 : Polymère tribloc selon l'un quelconque des modes 1 à 36, lequel polymère tribloc est un élastomère thermoplastique.
Mode 38 : Composition qui comprend un polymère tribloc défini à l'un quelconque des modes 1 à 37 et un autre composant.
Mode 39 : Procédé de synthèse d'un polymère tribloc de formule A-B-C défini à l'un quelconque des modes 1 à 37, lequel procédé comprend, en présence d'un système catalytique à base au moins d'un métallocène de formule (I) et d'un organomagnésien de formule (II),la copolymérisation statistique d'un mélange monomère contenant de l'éthylène et un 1,3-diène , suivie de l'homopolymérisation de l'éthylène,

   P(Cp¹Cp²) Nd(BH₄)_{(1+y)} Li_{y} (THF)ₓ (I)

   R-Mg-A (II)

   Cp¹ et Cp², identiques ou différents, étant choisis dans le groupe constitué par les groupes cyclopentadiényles et les groupes fluorényles, les groupes pouvant être substitués ou non, P étant un groupe pontant les deux groupes Cp¹ et Cp² et représentant un groupe ZR¹R², Z représentant un atome de silicium ou de carbone, R¹ et R², identiques ou différents, représentant chacun un groupe alkyle comprenant de 1 à 20 atomes de carbone, de préférence un méthyle, y, nombre entier, étant égal ou supérieur à 0,
   x, nombre entier ou non, étant égal ou supérieur à 0,
   R comprenant un noyau benzénique dont deux atomes de carbone sont substitués, l'un des deux est substitué par un méthyle, un éthyle ou un isopropyle ou forme un cycle avec l'atome de carbone qui est son plus proche voisin, le deuxième atome de carbone étant substitué par un méthyle, un éthyle ou un isopropyle, l'atome de magnésium étant en position ortho par rapport à chacun desdits deux atomes de carbone,
   A représentant un bloc polystyrène,
   B représentant un bloc copolymère statistique de température de transition vitreuse inférieure à -10°C, le copolymère statistique comprenant des unités d'un 1,3-diène et plus de 50% en mole d'unités éthylène,
   C représentant un bloc polyéthylène de température de fusion supérieure à 90°C.

Les caractéristiques précitées de la présente invention, ainsi que d'autres, seront mieux comprises à la lecture de la description suivante de plusieurs exemples de réalisation de l'invention, donnés à titre illustratif et non limitatif.

### Exemples

### 1-1-Chromatographie d'exclusion stérique (SEC-THF) :

Les analyses de chromatographie d'exclusion stérique des homopolymères polystyrène et des polymères diblocs PS-b-EBR ont été réalisées avec un appareil Viscotek (Malvern Instruments) équipé d'une colonne de garde et de 3 colonnes (SDVB, 5 µm, 330 × 7,5 mm, Polymer Standards) et de 3 détecteurs (réfractomètre, viscosimètre et diffusion de la lumière). Les échantillons sont préparés à une concentration de 3-4 mg mL⁻¹ et filtrés sur une membrane PTFE 0,45 µm et les analyses sont réalisées à 40 °C dans du THF stabilisé à un débit de 1 mL min⁻¹. Les données sont acquises et traitées à l'aide du logiciel OmniSEC. Les masses molaires moyennes en nombre (Mn) des copolymères sont déterminées à l'aide d'une calibration conventionnelle obtenue à partir d'étalons polystyrène (800 - 2 500 000 g mol⁻¹), Polymer Standard Service (Mainz) en utilisant le détecteur réfractomètre. La dispersité *Ð* (*Ð* = Mw/Mn) est également déterminée.

La Mn du bloc polystyrène du polymère tribloc peut aussi être déterminée par la méthode d'analyse chromatographique à exclusion de taille au cours de la synthèse du tribloc avant la formation du bloc central et du bloc polyéthylène, par exemple après désactivation des chaînes du polystyrène vivant par exemple par ajout de méthanol ou d'éthanol à la solution polymère du polystyrène vivant avant l'ajout du mélange monomère contenant de l'éthylène et un 1,3-diène. La Mn du polymère à deux blocs qui est formé comme produit intermédiaire dans la synthèse du polymère tribloc et qui contient à titre de premier bloc le bloc polystyrène du tribloc et à titre de deuxième bloc le bloc central du tribloc, peut être aussi déterminée par la méthode d'analyse chromatographique à exclusion de taille au cours de la synthèse du tribloc avant la formation du bloc polyéthylène, par exemple après désactivation des chaînes polymères du polymère à deux blocs.

La Mn du bloc central du polymère tribloc peut être déterminée à partir de la Mn du bloc polystyrène et de la Mn du polymère à deux blocs préalablement déterminées.

### 1-2- Chromatographie d'exclusion stérique des polymères triblocs (SEC-HT) :

Les analyses de Chromatographie d'exclusion stérique à haute température (HT-SEC ou SEC-HT) ont été réalisées avec un appareil Viscotek (Malvern Instruments) équipé de 3 colonnes (PLgel Olexis 300 mm x 7 mm I. D. de Agilent Technologies) et de 3 détecteurs (réfractomètre et viscosimètre différentiels, et diffusion de la lumière). 200 µL d'une solution de l'échantillon à une concentration de 3 mg mL⁻¹ ont été élués dans le 1,2,4-trichlorobenzène en utilisant un débit de 1 mL min⁻¹ à 150 °C. La phase mobile a été stabilisée par du 2,6-di(tert-butyl)-4-méthylphénol (400 mg L⁻¹). Le logiciel OmniSEC a été utilisé pour l'acquisition et l'analyse des données. Les masses molaires moyenne en nombre (Mn) et en masse (Mw) des polymères triblocs synthétisés sont calculées en utilisant une courbe de calibration universelle étalonnée à partir de polystyrènes standards (Masses molaires au pic *M*ₚ : 672 à 12 000 000 g mol⁻¹) de Polymer Standard Service (Mainz) en utilisant les détecteurs réfractomètre et viscosimètre. La dispersité *Ð* (*Ð* = Mw/Mn) est également calculée.

### 2-Calorimétrie différentielle à balayage (DSC) :

Les analyses DSC sont effectuées sur un appareil DSC 3+ (Mettler Toledo) avec des creusets en aluminium (40 µL) scellés et sous flux d'azote (30 mL min⁻¹). Les programmes de températures sont les suivants :
2-1-Les thermogrammes des homopolymères polystyrène (exemple 1 et 2) sont obtenus selon le programme suivant : • étape 1 : rampe de 25 °C à 140 °C (10 °C min⁻¹), • étape 2 : rampe de 140 °C à 25 °C (10 °C min⁻¹), • étape 3 : rampe de 25 °C à 140 °C (10 °C min⁻¹), • étape 4 : rampe de 140 °C à 25 °C (10 °C min⁻¹), • étape 5 : rampe de 25 °C à 140 °C (10 °C min⁻¹). Les températures de transition vitreuse (Tg) des PS rapportées dans le tableau 2 (exemple 1 et 2) sont déterminées à l'étape 5 (rampe 25 °C à 140 °C à 10 °C min⁻¹).

2-2-Les thermogrammes des homopolymères polystyrène (exemple 3, 4, 5, 6 et 7) sont obtenus selon le programme suivant : • étape 1 : rampe de 25 °C à 150 °C (10 °C min⁻¹), • étape 2 : isotherme de 1 min à 150 °C , • étape 3 : rampe de 150 °C à 25 °C (10 °C min⁻¹), • étape 4 : isotherme de 3 min à 25 °C, • étape 5 : rampe de 25 °C à 150 °C (10 °C min⁻¹). Les températures de transition vitreuse (Tg) des PS rapportées dans le tableau 2 (exemples 4, 5, 6 et 7) sont déterminées à l'étape 5 (rampe 25 °C à 150 °C à 10 °C min⁻¹).

2-3-Les thermogrammes des polymères diblocs PS-*b*-EBR (exemple 1 et 2) sont obtenus selon le programme suivant : • étape 1 : rampe de 25 °C à 180 °C (10 °C min⁻¹), • étape 2 : isotherme de 5 min à 180 °C, • étape 3 : rampe de 180 °C à -80 °C (10 °C min⁻¹), • étape 4 : isotherme de 5 min à -80 °C, • étape 5 : rampe de -80 °C à 180 °C (10 °C min⁻¹), • étape 6 : isotherme de 5 min à 180 °C, • étape 7 : rampe de 180 °C à -80 °C (10 °C min⁻¹), • étape 8 : isotherme de 5 min à -80 °C • étape 9 : rampe de -80 °C à 180 °C (10 °C min⁻¹). Les températures de transition vitreuse (*Tg*) des blocs EBR et PS rapportées dans le tableau 2 (exemples 1et 2) sont déterminées à l'étape 9 (rampe -80 °C à 180 °C à 10 °C min⁻¹).

2-4-Les thermogrammes des polymères triblocs PS-*b*-EBR-*b*-PE (exemple 3, 4, 5, 6 et 7) sont obtenus selon le programme suivant : • étape 1 : rampe de 25 °C à 180 °C (10 °C min⁻¹), • étape 2 : isotherme de 1 min à 180 °C, • étape 3 : rampe de 180 °C à -80 °C (10 °C min⁻¹), • étape 4 : isotherme de 3 min à -80 °C, • étape 5 : rampe de -80 °C à 180 °C (10 °C min⁻¹), • étape 6 : isotherme de 1 min à 180 °C, • étape 7 : rampe de 180 °C à -80 °C (20 °C min⁻¹), • étape 8 : isotherme de 3 min à -80 °C, • étape 9 : rampe de -80 °C à 180 °C (20 °C min⁻¹). Les températures de transition vitreuse (Tg) et les températures de fusion (Tf) des blocs EBR et PE respectivement rapportées dans le tableau 2 (exemple 4, 5, 5', 6 et 7) sont déterminées à l'étape 5 (rampe -80 °C à 180 °C à 10 °C min⁻¹). Les températures de cristallisation (Tc) des blocs PE rapportées dans le tableau 2 (exemples 3, 4, 5, 6 et 7) sont déterminées à l'étape 3 (rampe 180 °C à -80 °C à 10 °C min⁻¹).

Les températures de transition vitreuse des polymères triblocs selon l'invention qui correspondent à la Tg du bloc polystyrène et à la Tg du bloc central sont déterminées selon le protocole décrit au paragraphe 2-2 et au paragraphe 2-3 respectivement.

Les températures de fusion (Tf) et de cristallisation (Tc) des polymères triblocs selon l'invention qui correspondent à celles des blocs centraux et des blocs polyéthylène sont déterminées selon le protocole décrit au paragraphe 2-4.

Les valeurs de Tg et de Tf et de Tc sont déterminées en appliquant le retraitement de données du logiciel STARe de chez Mettler Toledo qui repose sur la méthode des tangentes pour la détermination de la Tg comme décrit dans la norme ASTM 3418, la valeur de la Tg correspondant au point désigné sous l'appellation bien connue « mid-point ». La température de fusion (Tf) correspond à la pointe du pic de fusion.

### 3-Essais de traction et cycles de recouvrance élastique ou reprise élastique :

Les tractions sont effectuées sur un appareil MTS Criterion C42 à température de la pièce d'analyse (20-25°C), muni d'un capteur de 50 N et avec une vitesse de traverse de 500 mm/min. Les matériaux sont pressés à 150 °C sous 4/5 tonnes dans un moule de 80 mm * 60 mm * 1,5 mm. Des éprouvettes normées de type H2 (dimensions utiles 30 mm x 4 mm) sont découpées à température ambiante avec un emporte-pièce approprié.

Le test de recouvrance élastique, également appelée reprise élastique, permet de quantifier la sensibilité à la déformation permanente des polymères après une déformation ou après des cycles répétés de déformation. Un cycle de recouvrance élastique consiste à soumettre une éprouvette à une traction avec une vitesse de traverse de 500 mm/min jusqu'à 300% de déformation nominale maximum (δₘₐₓ), puis à supprimer la contrainte pendant 10 minutes, à la suite desquelles la déformation rémanente (δi) de l'éprouvette est mesurée en pourcent. L'éprouvette est soumise à 9 cycles de recouvrance. La recouvrance élastique ε_{recov} est calculée après chaque cycle de recouvrance à partir de la relation ε_{recov} = (δₘₐₓ - δi)/δₘₐₓ

### 4-Synthèses

Toutes les réactions sensibles à l'air et/ou à l'humidité sont effectuées sous atmosphère d'argon. Les solvants de polymérisations secs (toluène, méthylcyclohexane et cyclohexane) sont prélevés à la fontaine à solvants (SPS800 MBraun).

Le 2-bromomésitylène (Sigma-Aldrich) est stockés sur tamis moléculaire (3 Å).

Le méthyltétrahydrofurane (MeTHF) est distillé sur Na/benzophénone. L'éthyltétrahydrofurfuryl éther (ETE) est passé sur alumine activée puis dilué dans le toluène pour obtenir une solution à 0,3 mol L⁻¹ (stockée sur tamis moléculaire).

Le styrène (Sigmal-Aldrich) est séché 24h sur CaH₂ sous atmosphère d'argon puis distillé sous vide. Le *n*-butyllithium (1,6M dans hexane, Sigma-Aldrich) est utilisé tel que reçu.

Le BMM (bromure de 2-mésityl-magnésium, 1M dans Et₂O, Sigma-Aldrich) est utilisé tel que reçu.

Le métallocène, en l'espèce le complexe de {Me₂Si(C₁₃H₈)₂Nd(BH₄)₂Li(THF)}₂, est préparé selon le protocole décrit dans la demande de brevet WO 2007054224 A2.

L'éthylène (grade N35, Air Liquide) est utilisé sans purification.

Le 1,3-butadiène est purifié sur une colonne de purification d'alumine « Axens » avant son utilisation.

Le 2,2'-Méthylènebis (6-tert-butyl-4-méthylphénol) (bi-BHT,Sigma-Aldrich) est utilisé tel que reçu comme antioxydant.

L'acétone et le méthanol (grade technique) sont utilisés pour précipiter les polymères.

L'appellation EBR est utilisée pour désigner un copolymère statistique d'éthylène et de 1,3-butadiène.

### Exemple 1 : Synthèse d'un polymère dibloc PS-b-EBR

*Etape 1 : Polymérisation anionique du styrène et transmétallation (PS-MgMes).* Dans un tube de Schlenk conditionné (3 cycles vide-argon), 40 mL de cyclohexane (ratio mₛₒₗᵥₐₙₜ/m_{monomère} = 7), 5 g de styrène (séché sur CaH₂ et distillé) et 0,166 mL (0,05 mmol, 0,2 équivalent) d'ETE (0,3 M dans le toluène et stocké sur tamis moléculaire) sont introduits. 0,156 mL (0,25 mmol, 1 équivalent) de n-BuLi (1,6 M dans hexane) sont ajoutés en dernier pour lancer la polymérisation. La solution devient orange foncé. Le milieu réactionnel est agité à 40 °C pendant 20 min pour atteindre 100% de conversion. La réaction de transmétallation est réalisée avec un ajout de 0,3 mL (0,3 mmol, 1,2 équivalent) de BMM pour obtenir un organomagnésien de formule (II) dans laquelle A est un polystyrène (PS) et R est le groupe mésityle (Mes). Le milieu est par la suite transféré à l'aide d'une canule sous flux d'argon dans le réacteur préalablement conditionné et chauffé à 90 °C.

*Etape 2 : Formation du polymère dibloc PS-b-EBR.* 32,7 mg (51 µmol) du complexe de Nd {Me₂Si(C₁₃H₈)₂Nd(BH₄)₂Li(THF)}₂ sont pesés en boite à gants dans un ballon de 50 mL. 160 mL de toluène sont prélevés de la fontaine à solvants dans un ballon de 250 mL. 0,2 mL (0,2 mmol) BMM(Et₂O) ont été ajoutés au toluène. La solution (toluène+BMM) est agitée durant 5 min puis le complexe de Nd {Me₂Si(C₁₃H₈)₂Nd(BH₄)₂Li(THF)}₂ est ajouté. La solution est transférée à l'aide d'une canule sous flux d'argon dans le réacteur contenant déjà la solution de PS-MgMes. Le réacteur est isolé et la pression réduite à 0,5 bar à l'aide d'une pompe à vide avant de lancer l'agitation (1000 tr min⁻¹). Le réacteur est ensuite pressurisé jusqu'à 4 bars avec un mélange éthylène/butadiène de ratio 80/20 molaire. La pression est maintenue constante dans le réacteur à l'aide d'un réservoir contenant le mélange éthylène/butadiène et la polymérisation est réalisée à 90°C. La consommation en monomères est suivie par la chute de pression dans le réservoir jusqu'à atteindre la consommation de 15 g du mélange éthylène/butadiène. Le réacteur est ensuite dépressurisé et dégazé avec précaution sous flux d'argon et le milieu est désactivé par ajout d'EtOH (environ 0,5 mL) puis refroidi à température ambiante. 0,2 g d'antioxydant 2,2'-méthylènebis(6-tert-butyl-4-méthylphénol) (di-BHT) sont ajoutés et le copolymère est précipité dans 600 mL de MeOH puis il est récupéré dans un cristallisoir et séché sous vide à 80-100 °C pendant 6h. Le polymère dibloc PS-b-EBR est pesé et analysé par SEC-THF et DSC.

### Exemple 2 : Synthèse d'un polymère dibloc PS-b-EBR

Les mêmes conditions expérimentales que pour l'exemple 1 sont mises en œuvre à la différence de la quantité styrène (7,5 g), de cyclohexane (67 mL) et de toluène (133 mL). Le temps de polymérisation du styrène est également augmenté à 30 min.

### Exemple 3 : Synthèse d'un polymère tribloc PS-b-EBR-b-PE

*Etape 1 : Polymérisation anionique du styrène et transmétallation (PS-MgMes).* Dans un tube de Schlenk conditionné (3 cycles vide argon), 13,5 mL de cyclohexane (ratio Mₛₒₗᵥₐₙₜ/M_{monomère} = 7), 1,5 g de styrène (séché sur CaH₂ et distillé) et 0,166 mL (0,05 mmol, 0,2 équivalent) d'ETE (0,3 M dans le toluène et stocké sur tamis moléculaire) sont introduits. 0,156 mL (0,25 mmol, 1 équivalent) de n-BuLi (1,6 M dans hexane) sont ajoutés en dernier pour lancer la polymérisation. La solution devient orange foncé. Le milieu réactionnel est agité à 40 °C pendant 10 min pour atteindre 100% de conversion. La réaction de transmétallation est réalisée avec un ajout de 0,3 mL (0,3 mmol, 1,2 équivalent) de BMM pour obtenir un organomagnésien de formule (II) dans laquelle A est un polystyrène (PS) et R est le groupe mésityle (Mes). Le milieu est par la suite transféré à l'aide d'une canule sous flux d'argon dans le réacteur préalablement conditionné et chauffé à 90 °C.

*Etape 2 : Formation du polymère tribloc PS-b-EBR-PE.* 32 mg (50 µmol) du complexe de Nd {Me₂Si(C₁₃H₈)₂Nd(BH₄)₂Li(THF)}₂ sont pesés en boite à gants dans un ballon de 50 mL. 186,5 ml toluène sont prélevés de la fontaine à solvants dans un ballon de 250 mL. 0,2 mL (0,2 mmol) BMM sont ajoutés au toluène. La solution (toluène+BMM(Et₂O)) est agitée durant 5 min puis le complexe de Nd {Me₂Si(C₁₃H₈)₂Nd(BH₄)₂Li(THF)}₂ est ajouté. La solution est transférée à l'aide d'une canule sous flux d'argon dans le réacteur contenant déjà la solution de PS-MgMes. Le réacteur est isolé et la pression réduite à 0,5 bar à l'aide d'une pompe à vide avant de lancer l'agitation (1000 tr min⁻¹). Le réacteur est ensuite pressurisé jusqu'à 4 bars avec un mélange éthylène/butadiène de ratio 80/20 molaire. Le milieu réactionnel est porté et maintenue à la température de 90C. La pression est maintenue constante dans le réacteur à l'aide d'un réservoir contenant le mélange éthylène/butadiène. La consommation en monomères est suivie par chute de pression dans le réservoir jusqu'à consommation de 15 g du mélange éthylène/butadiène. Le réacteur est ensuite isolé et les monomères restants sont consommés jusqu'à ce que la pression atteigne 2,5 bars pour obtenir le copolymère EBR de *M*ₙ désirée et en parallèle le réservoir est conditionné par 2 cycles vide-éthylène puis pressurisé avec 100% d'éthylène. Le réacteur est ensuite pressurisé à 4 bars et alimenté en éthylène. Après avoir consommé la quantité 1,5 g en éthylène, le réacteur est dépressurisé et dégazé avec précaution sous flux d'argon et le milieu est désactivée par ajout d'EtOH (environ 0,5 mL) puis refroidi à température ambiante. 0,2 g d'antioxydant 2,2'-méthylènebis(6-tert-butyl-4-méthylphénol) (di-BHT) sont ajoutés et le copolymère est précipité dans 600 mL de MeOH puis il est récupéré dans un cristallisoir et séché sous vide à 80-100 °C pendant 6h. Le polymère tribloc PS-*b*-EBR-*b*-PE est pesé et analysé par DSC.

### Exemple 4 : Synthèse du polymère tribloc PS-b-EBR-b-PE

Les mêmes conditions expérimentales que pour l'exemple 3 ont été mises en œuvre à la différence de la quantité styrène (2,5 g), de cyclohexane (22,5 mL) et de toluène (177,5 mL).

### Exemple 5 : Synthèse du polymère tribloc PS-b-EBR-b-PE

Les mêmes conditions expérimentales que pour l'exemple 3 ont été mises en œuvre à la différence de la quantité styrène (2,5 g), de cyclohexane (22,5 mL) et de toluène (177,5 mL).

### Exemple 6 : Synthèse du polymère tribloc PS-b-EBR-b-PE

Les mêmes conditions expérimentales que pour l'exemple 3 ont été mises en œuvre à la différence de la quantité styrène (3,75 g), de cyclohexane (33,7 mL) et de toluène (166,3 mL).

### Exemple 7 : Synthèse du polymère tribloc PS-b-EBR-b-PE

Les mêmes conditions expérimentales que pour l'exemple 3 ont été mises en œuvre à la différence de la quantité styrène (5 g), de cyclohexane (45 mL) et de toluène (155 mL).

Les caractéristiques relatives à la macrostructure des polymères figurent dans le tableau 1. Mn exp sont les masses molaires moyennes en nombre déterminées par l'analyse SEC. Mn théo sont les masses molaires moyennes en nombre visées. Dans le tableau 1 figure également les quantités de polymères visés (m_{copo} visée) et celles effectivement obtenues expérimentalement (m_{copo} exp). *Ð* _{PS} et *Ð* _{copo} sont respectivement la dispersité du bloc polystyrène et la dispersité du copolymère.

Les températures de transition vitreuse (Tg), de fusion (Tf) et de cristallisation (Tc) des polymères figurent dans le tableau 2.

Les résultats de recouvrance élastique des polymères figurent dans le tableau 3.

Les résultats montrent que l'introduction d'un bloc polyéthylène selon l'invention dans un polymère dibloc PS-b-EBR en extrémité du bloc EBR de sorte que le bloc EBR devienne le bloc central du polymère tribloc conforme à l'invention permet d'augmenter significativement la recouvrance élastique du polymère.

Dans les tableaux, « nd » est une abréviation de non déterminé.

**Tableau 1**

| | | Polystyrène (PS) | | Copolymère | | | | |
|---|---|---|---|---|---|---|---|---|
| Exemple | copolymère | Mn _{PS} exp (g/mol) | *Ð* _{PS} | m_{copo} visée (g) | m_{copo} obtenue (g) | Mn _{copo} théo (g/mol) | Mn _{copo} exp (g/mol) | *Ð* _{copo} |
| 1 | PS-b-EBR | 24 200 | 1,08 | 20 | 18,70 | 80 000 | 59 200 | 1,7 |
| 2 | PS-b-EBR | 37 300 | 1,05 | 22,5 | 23,82 | 90 000 | 90 500 | 1,6 |
| 3 | PS-*b*-EBR-*b*-PE | 7 800 | 1,09 | 18 | 18,00 | 72 000 | nd | nd |
| 4 | PS-*b*-EBR-*b*-PE | 10 700 | 1,07 | 19 | 19,50 | 76 000 | nd | nd |
| 5 | PS-*b*-EBR-*b*-PE | 15 000 | 1,05 | 19 | 17,65 | 76 000 | nd | nd |
| 6 | PS-*b*-EBR-*b*-PE | 24 100 | 1,06 | 20,25 | 20,75 | 81000 | nd | nd |
| 7 | PS-*b*-EBR-*b*-PE | 36 400 | 1,05 | 21,50 | 21,50 | 86 000 | nd | nd |

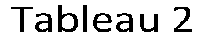

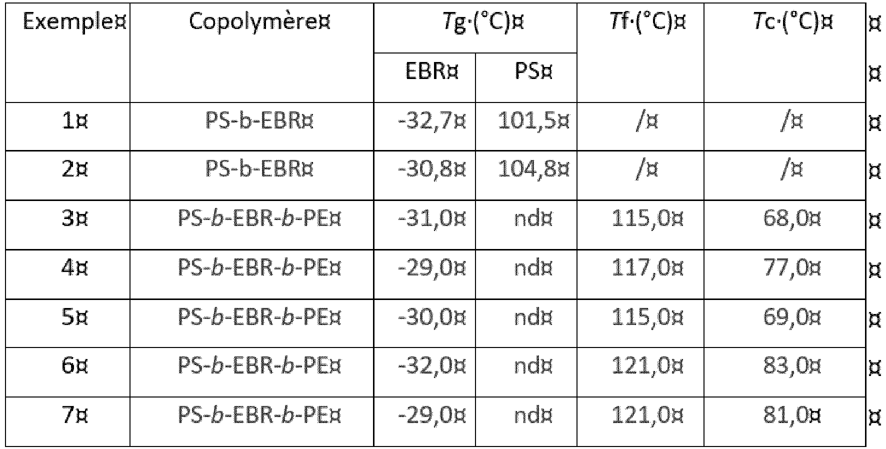

**Tableau 3**

| Exemple | Copolymère/Cycle de recouvrance | 1^{er} | 2^{ème} | 3^{ème} | 4^{ème} | 5^{ème} | 6^{ème} | 7^{ème} | 8^{ème} | gème |
|---|---|---|---|---|---|---|---|---|---|---|
| 1 | PS-b-EBR | 58,8 | 53,4 | 50 | 56,3 | nd | nd | nd | nd | nd |
| 2 | PS-b-EBR | nd | nd | nd | nd | nd | nd | nd | nd | nd |
| 3 | PS-*b*-EBR-*b*-PE | 93,5 | 92,1 | 91,3 | 90,7 | 90,3 | 89,8 | 89,6 | 89,3 | 89,1 |
| 4 | PS-*b*-EBR-*b*-PE | 93,7 | 92,7 | 92,2 | 91,8 | 91,5 | 91,3 | 91,1 | 91,9 | 91,8 |
| 5 | PS-*b*-EBR-*b*-PE | 98,2 | 97,6 | 96,8 | 96,4 | 96,1 | 95,8 | 95,3 | 95,2 | 94,7 |
| 6 | PS-*b*-EBR-*b*-PE | 87,5 | 85 | 83,8 | 82,9 | 82,3 | 81,7 | 81,3 | 80,8 | 80,4 |
| 7 | PS-*b*-EBR-*b*-PE | 86,3 | 84,6 | 83,7 | 83,2 | 82,8 | 82,6 | 82,3 | 82 | 81,8 |

## Revendications

1. Polymère tribloc de formule A-B-C dans laquelle le symbole A représente un bloc polystyrène, le symbole B représente un bloc copolymère statistique de température de transition vitreuse inférieure à -10°C, le copolymère statistique comprenant des unités d'un 1,3-diène et plus de 50% en mole d'unités éthylène, et le symbole C représente un bloc polyéthylène de température de fusion supérieure à 90°C.

2. Polymère tribloc selon la revendication 1 dans lequel le bloc copolymère statistique est un copolymère statistique d'éthylène et d'un 1,3-diène.

3. Polymère tribloc selon la revendication 1 ou 2 dans lequel le bloc copolymère statistique contient plus de 60% en mole d'unités éthylène, de préférence au moins 70% en mole d'unités éthylène.

4. Polymère tribloc selon l'une quelconque des revendications 1 à 3 dans lequel le bloc copolymère statistique contient moins de 90% en mole d'unités éthylène.

5. Polymère tribloc selon l'une quelconque des revendications 1 à 4 dans lequel le bloc copolymère statistique contient au plus 85% en mole d'unités éthylène.

6. Polymère tribloc selon l'une quelconque des revendications 1 à 5 dans lequel la part de bloc polystyrène et de bloc polyéthylène dans le polymère tribloc représente moins de 50% en masse de la masse du polymère tribloc, préférentiellement de 15% à 40% en masse de la masse du polymère tribloc.

7. Polymère tribloc selon l'une quelconque des revendications 1 à 6 dans lequel le bloc copolymère statistique a une température de transition vitreuse comprise entre -90°C et -10°C, de préférence comprise entre -70°C et -20°C, de manière plus préférentielle entre -50°C et -20°C.

8. Polymère tribloc selon l'une quelconque des revendications 1 à 7 dans lequel le bloc copolymère statistique a une masse molaire moyenne en nombre supérieure à 20 000 g/mol, préférentiellement supérieure ou égale à 50 000 g/mol.

9. Polymère tribloc selon l'une quelconque des revendications 1 à 8 dans lequel le 1,3-diène est le 1,3-butadiène ou l'isoprène ou bien un mélange de 1,3-diènes dont un est le 1,3-butadiène, de préférence le 1,3-butadiène.

10. Polymère tribloc selon l'une quelconque des revendications 1 à 9 dans lequel le 1,3-diène est le 1,3-butadiène ou un mélange de 1,3-diènes dont un est le 1,3-butadiène, et le bloc copolymère statistique contient des motifs 1,2-cyclohexane ou des motifs 1,4-cyclohexane, de préférence des motifs 1,2-cyclohexane.

11. Polymère tribloc selon l'une quelconque des revendications 1 à 10 dans lequel le bloc polystyrène a une masse molaire moyenne en nombre supérieure ou égale à 5 000 g/mol, préférentiellement allant de 5 000 g/mol à 100 000 g/mol.

12. Polymère tribloc selon l'une quelconque des revendications 1 à 11 dans lequel le bloc polyéthylène a une masse molaire moyenne en nombre supérieure ou égale à 2 000 g/mol et inférieure ou égale à 12 000 g/mol.

13. Polymère tribloc selon l'une quelconque des revendications 1 à 12, lequel polymère tribloc est un élastomère thermoplastique.

14. Composition qui comprend un polymère tribloc selon l'une quelconque des revendications 1 à 13 et un autre composant.

15. Procédé de synthèse d'un polymère tribloc de formule A-B-C défini à l'une quelconque des revendications 1 à 13, lequel procédé comprend, en présence d'un système catalytique à base au moins d'un métallocène de formule (I) et d'un organomagnésien de formule (II), la copolymérisation statistique d'un mélange monomère contenant de l'éthylène et un 1,3-diène , suivie de l'homopolymérisation de l'éthylène,
P(Cp¹Cp²) Nd(BH₄)_{(1+y)} Li_{y} (THF)ₓ (I)
R-Mg-A (II)
Cp¹ et Cp², identiques ou différents, étant choisis dans le groupe constitué par les groupes cyclopentadiényles et les groupes fluorényles, les groupes pouvant être substitués ou non,
P étant un groupe pontant les deux groupes Cp¹ et Cp² et représentant un groupe ZR¹R², Z représentant un atome de silicium ou de carbone, R¹ et R², identiques ou différents, représentant chacun un groupe alkyle comprenant de 1 à 20 atomes de carbone, de préférence un méthyle, y, nombre entier, étant égal ou supérieur à 0,
x, nombre entier ou non, étant égal ou supérieur à 0,
R comprenant un noyau benzénique dont deux atomes de carbone sont substitués, l'un des deux est substitué par un méthyle, un éthyle ou un isopropyle ou forme un cycle avec l'atome de carbone qui est son plus proche voisin, le deuxième atome de carbone étant substitué par un méthyle, un éthyle ou un isopropyle, l'atome de magnésium étant en position ortho par rapport à chacun desdits deux atomes de carbone,
A représentant un bloc polystyrène,
B représentant un bloc copolymère statistique de température de transition vitreuse inférieure à -10°C, le copolymère statistique comprenant des unités d'un 1,3-diène et plus de 50% en mole d'unités éthylène,
C représentant un bloc polyéthylène de température de fusion supérieure à 90°C.

## Patentansprüche

1. Triblockpolymer der Formel A-B-C, in der das Symbol A für einen Polystyrolblock steht, das Symbol B für einen statistischen Copolymerblock mit einer Glasübergangstemperatur kleiner -10 °C steht, wobei das statistische Copolymer Einheiten eines 1,3-Diens und mehr als 50 Mol-% Ethyleneinheiten umfasst, und das Symbol C für einen Polyethylenblock mit einer Schmelztemperatur größer 90 °C steht.

2. Triblockpolymer nach Anspruch 1, wobei es sich bei dem statistischen Copolymerblock um ein statistisches Copolymer von Ethylen und einem 1,3-Dien handelt.

3. Triblockpolymer nach Anspruch 1 oder 2, wobei der statistische Copolymerblock mehr als 60 Mol-% Ethyleneinheiten, vorzugsweise mindestens 70 Mol-% Ethyleneinheiten, enthält.

4. Triblockpolymer nach einem der Ansprüche 1 bis 3, wobei der statistische Copolymerblock weniger als 90 Mol-% Ethyleneinheiten enthält.

5. Triblockpolymer nach einem der Ansprüche 1 bis 4, wobei der statistischen Copolymerblock höchstens 85 Mol-% Ethyleneinheiten enthält.

6. Triblockpolymer nach einem der Ansprüche 1 bis 5, wobei der Anteil des Polystyrolblocks und des Polyethylenblocks in dem Triblockpolymer weniger als 50 Gew.-% des Gewichts des Triblockpolymers, vorzugsweise 15 bis 40 Gew.-% des Gewichts des Triblockpolymers, ausmacht.

7. Triblockpolymer nach einem der Ansprüche 1 bis 6, wobei der statistische Copolymerblock eine Glasübergangstemperatur zwischen -90 °C und -10 °C, vorzugsweise zwischen -70 °C und -20 °C, besonders bevorzugt zwischen -50 °C und -20 °C, aufweist.

8. Triblockpolymer nach einem der Ansprüche 1 bis 7, wobei der statistische Copolymerblock eine zahlenmittlere Molmasse größer 20.000 g/mol, vorzugsweise größer oder gleich 50.000 g/mol, aufweist.

9. Triblockpolymer nach einem der Ansprüche 1 bis 8, wobei es sich bei dem 1,3-Dien um 1,3-Butadien oder Isopren oder auch eine Mischung von 1,3-Dienen, von denen eines 1,3-Butadien ist, vorzugsweise 1,3-Butadien, handelt.

10. Triblockpolymer nach einem der Ansprüche 1 bis 9, wobei es sich bei dem 1,3-Dien um 1,3-Butadien oder eine Mischung von 1,3-Dienen, von denen eines 1,3-Butadien ist, handelt und der statistische Copolymerblock 1,2-Cyclohexaneinheiten oder 1,4-Cyclohexaneinheiten, vorzugsweise 1,2-Cyclohexaneinheiten, enthält.

11. Triblockpolymer nach einem der Ansprüche 1 bis 10, wobei der Polystyrolblock eine zahlenmittlere Molmasse größer oder gleich 5000 g/mol, vorzugsweise im Bereich von 5000 g/mol bis 100.000 g/mol, aufweist.

12. Triblockpolymer nach einem der Ansprüche 1 bis 11, wobei der Polyethylenblock eine zahlenmittlere Molmasse größer oder gleich 2000 g/mol und kleiner oder gleich 12.000 g/mol aufweist.

13. Triblockpolymer nach einem der Ansprüche 1 bis 12, wobei es sich bei dem Triblockpolymer um ein thermoplastisches Elastomer handelt.

14. Zusammensetzung, die ein Triblockpolymer nach einem der Ansprüche 1 bis 13 und eine andere Komponente umfasst.

15. Verfahren zur Synthese eines Triblockpolymers der Formel A-B-C gemäß einem der Ansprüche 1 bis 13, wobei das Verfahren die statistische Copolymerisation einer Monomerenmischung, die Ethylen und ein 1,3-Dien enthält, und die anschließende Homopolymerisation von Ethylen in Gegenwart eines katalytischen Systems auf Basis von mindestens einem Metallocen der Formel (I) und einer Organomagnesiumverbindung der Formel (II) umfasst,
P(Cp¹Cp²) Nd(BH₄)_{(1+y)} Li_{y} (THF)ₓ (I)
R-Mg-A (II)
wobei Cp¹ und Cp² gleich oder verschieden sind und aus der Gruppe bestehend aus Cyclopentadienylgruppen und Fluorenylgruppen ausgewählt sind, wobei die Gruppen substituiert oder unsubstituiert sein können,
wobei P eine die beiden Gruppen Cp¹ und Cp² verbrückende Gruppe ist und für eine Gruppe ZR¹R² steht, wobei Z für ein Silicium- oder Kohlenstoffatom steht und R¹ und R² gleich oder verschieden sind und jeweils für eine Alkylgruppe mit 1 bis 20 Kohlenstoffatomen, vorzugsweise ein Methyl, stehen,
wobei y ganzzahlig ist und gleich oder größer als 0 ist, wobei x ganzzahlig oder nicht ganzzahlig ist und gleich oder größer als 0 ist,
wobei R einen Benzolring umfasst, von dem zwei Kohlenstoffatome substituiert sind, von denen eines durch ein Methyl, ein Ethyl oder ein Isopropyl substituiert ist oder mit dem Kohlenstoffatom, das sein nächster Nachbar ist, einen Ring bildet, wobei das zweite Kohlenstoffatom durch ein Methyl, ein Ethyl oder ein Isopropyl substituiert ist, wobei das Magnesiumatom in ortho-Position zu jedem der beiden Kohlenstoffatome steht, wobei A für einen Polystyrolblock steht,
wobei B für einen statistischen Copolymerblock mit einer Glasübergangstemperatur kleiner -10 °C steht, wobei das statistische Copolymer Einheiten eines 1,3-Diens und mehr als 50 Mol-% Ethyleneinheiten umfasst,
wobei C für einen Polyethylenblock mit einer Schmelztemperatur größer 90 °C steht.

## Claims

1. Triblock polymer of formula A-B-C in which the symbol A represents a polystyrene block, the symbol B represents a statistical copolymer block with a glass transition temperature of less than -10°C, the statistical copolymer comprising units of a 1,3-diene and more than 50 mol% of ethylene units, and the symbol C represents a polyethylene block with a melting temperature of greater than 90°C.

2. Triblock polymer according to Claim 1, in which the statistical copolymer block is a statistical copolymer of ethylene and of a 1,3-diene.

3. Triblock polymer according to Claim 1 or 2, in which the statistical copolymer block contains more than 60 mol% of ethylene units, preferably at least 70 mol% of ethylene units.

4. Triblock polymer according to any one of Claims 1 to 3, in which the statistical copolymer block contains less than 90 mol% of ethylene units.

5. Triblock polymer according to any one of Claims 1 to 4, in which the statistical copolymer block contains at most 85 mol% of ethylene units.

6. Triblock polymer according to any one of Claims 1 to 5, in which the portion of polystyrene block and of polyethylene block in the triblock polymer represents less than 50% by mass of the mass of the triblock polymer, preferentially from 15% to 40% by mass of the mass of the triblock polymer.

7. Triblock polymer according to any one of Claims 1 to 6, in which the statistical copolymer block has a glass transition temperature of between -90°C and -10°C, preferably of between -70°C and -20°C, more preferentially of between -50°C and -20°C.

8. Triblock polymer according to any one of Claims 1 to 7, in which the statistical copolymer block has a number-average molar mass of greater than 20 000 g/mol, preferentially greater than or equal to 50 000 g/mol.

9. Triblock polymer according to any one of Claims 1 to 8, in which the 1,3-diene is 1,3-butadiene or isoprene or else a mixture of 1,3-dienes of which one is 1,3-butadiene, preferably 1,3-butadiene.

10. Triblock polymer according to any one of Claims 1 to 9, in which the 1,3-diene is 1,3-butadiene or a mixture of 1,3-dienes of which one is 1,3-butadiene, and the statistical copolymer block contains 1,2-cyclohexane units or 1,4-cyclohexane units, preferably 1,2-cyclohexane units.

11. Triblock polymer according to any one of Claims 1 to 10, in which the polystyrene block has a number-average molar mass of greater than or equal to 5000 g/mol, preferentially ranging from 5000 g/mol to 100 000 g/mol.

12. Triblock polymer according to any one of Claims 1 to 11, in which the polyethylene block has a number-average molar mass of greater than or equal to 2000 g/mol and less than or equal to 12 000 g/mol.

13. Triblock polymer according to any one of Claims 1 to 12, which triblock polymer is a thermoplastic elastomer.

14. Composition which comprises a triblock polymer according to any one of Claims 1 to 13 and another component.

15. Process for synthesizing a triblock polymer of formula A-B-C defined in any one of Claims 1 to 13, which process comprises, in the presence of a catalytic system based on at least one metallocene of formula (I) and on an organomagnesium compound of formula (II), the statistical copolymerization of a monomer mixture containing ethylene and a 1,3-diene, followed by the homopolymerization of ethylene,
P{Cρ¹Cβ²)Nd(BH₄)_{(1+y)}Li_{y}(THF)ₓ (I)
R-Mg-A (II)
Cp¹ and Cp², which are identical or different, being selected from the group consisting of cyclopentadienyl groups and fluorenyl groups, it being possible for the groups to be substituted or unsubstituted,
P being a group bridging the two groups Cp¹ and Cp² and representing a group ZR¹R², Z representing a silicon or carbon atom, R¹ and R², which are identical or different, each representing an alkyl group comprising from 1 to 20 carbon atoms, preferably a methyl, y, which is an integer, being equal to or greater than 0,
x, which is or not an integer, being equal to or greater than 0,
R comprising a benzene ring of which two carbon atoms are substituted, one of the two is substituted by a methyl, an ethyl or an isopropyl or forms a ring with the carbon atom which is its closest neighbour, the second carbon atom being substituted by a methyl, an ethyl or an isopropyl, the magnesium atom being in ortho position relative to each of said two carbon atoms,
A representing a polystyrene block,
B representing a statistical copolymer block with a glass transition temperature of less than - 10°C, the statistical copolymer comprising units of a 1,3-diene and more than 50 mol% of ethylene units,
C representing a polyethylene block with a melting temperature of greater than 90°C.
